Europäisches Patentamt

European Patent Office

Office européen des brevets

(11) Veröffentlichungsnummer: **0 192 196**
**B1**

(12) **EUROPÄISCHE PATENTSCHRIFT**

(45) Veröffentlichungstag der Patentschrift: **25.04.90**

(21) Anmeldenummer: **86101876.0**

(22) Anmeldetag: **14.02.86**

(51) Int. Cl.⁵: **B 60 C 15/02**

(54) **Luftbereiftes Fahrzeugrad.**

(30) Priorität: **20.02.85 DE 3505832**

(43) Veröffentlichungstag der Anmeldung:
**27.08.86 Patentblatt 86/35**

(45) Bekanntmachung des Hinweises auf die
Patenterteilung:
**25.04.90 Patentblatt 90/17**

(84) Benannte Vertragsstaaten:
**AT BE CH DE FR GB IT LI LU NL SE**

(56) Entgegenhaltungen:
**AT-A- 359 849**
**DE-A-1 605 627**
**DE-B-1 082 822**
**FR-A-2 249 778**
**GB-A- 359 110**
**US-A-1 335 411**
**US-A-3 301 303**

(73) Patentinhaber: **Continental Aktiengesellschaft**
**Königsworther Platz 1**
**D-3000 Hannover 1 (DE)**

(72) Erfinder: **Gerloff, Klaus, Dipl.-Ing.**
**Tischbeinstrasse 5**
**D-3004 Isernhagen (DE)**
Erfinder: **Sergel, Horst, Dipl.-Ing.**
**Fuchsrain 20 A**
**D-3000 Hannover 51 (DE)**

�><74 Vertreter: **Schneider, Egon**
**c/o CONTINENTAL Aktiengesellschaft**
**Königsworther Platz 1 Postfach 169**
**D-3000 Hannover 1 (DE)**

Courier Press, Leamington Spa, England.

## Beschreibung

Die Erfindung betrifft ein luftbereiftes Fahrzeugrad mit einem im wesentlichen aus Gummi oder gummiähnlichen Kunststoffen bestehenden Reifen mit zugfesten, flachen Wulstkernen in den Reifenwülsten, bei dem die Quererstreckung der Wulstkerne wesentlich größer ist als die Radialerstreckung, bei dem die Karkasse durch Umschlingen der Wulstkerne in den Wülsten verankert ist und bei dem die umgeschlagenen Karkaßabschnitte radial außen von den Wulstkernen im wesentlichen parallel zu diesen nach axial innen hin zurückgeführt sind.

Aus der US—A—3 964 532 ist ein Reifen für ein solches Fahrzeugrad bekannt. Der dort beschriebene Reifen, der unter sehr steilem Winkel von den Wülsten in die Seitenwände übergeht, ist im unterem Seitenwandbereich sehr steif ausgebildet, was ein recht ungünstiges Federungsverhalten zur Folge hat. Weiterhin ist der bekannte Reifen nicht für einen Notlauf geeignet.

Der Erfindung liegt deshalb die Aufgabe zugrunde, ein Fahrzeugrad mit einem Reifen anzugeben, der einerseits eine hohe Belastung verträgt und der sich auf der anderen Seite durch eine große Flexibilität im unterem Seitenwandbereich auszeichnet, so daß der Reifen ein besonders günstiges Federungsverhalten aufweist. Weiterhin sollte das Fahrzeugrad für einen Notlauf geeignet sein, d.h. der Reifen sollte eine größere Fahrstrecke ohne Luftdruck vertragen, ohne daß dauerhafte Schäden zurückbleiben.

Diese Aufgabe wird erfindungsgemäß dadurch gelöst, daß die Karkasse von der Reifenseitenwand kommend flach in den Wulstbereich einläuft, und daß sie unmittelbar am umgeschlagenen Karkaßende anliegt.

Durch den flachen Verlauf und die dünne Ausgestaltung der unteren Reifenseitenwände erzielt man den Vorteil, daß der Reifen in diesem Bereich sehr biegsam wird, so daß dieser Bereich das Federungsverhalten des Reifens positiv beeinflußt. Die dünne Ausgestaltung dieses Bereichs ohne Wulstverstärker und andere Verstärkungseinlagen wird dadurch möglich, daß man den umgeschlagenen Karkaßabschnitt am Wulstkern nach axial innen zurückführt und ihn durch die flach verlaufende Karkasse praktisch klemmt. Durch diese Maßnahme können die großen Kräfte aufgefangen werden, die bei LKW-Reifen aufgrund des hohen Innendrucks an die Karkasse erzeugt werden.

Als zusätzliche Maßnahme zur Verbesserung des Reifensitzes werden Felgenringe vorgeschlagen, die sich radial außen von den Reifenwülsten befinden und die eine Klemmung der Reifenwülste bewirken. Zur Gewährleistung eines Notlaufs dient ein Notlaufsattel, der unlösbar mit den Felgenringen verbungen oder als separates Bauteil ausgebildet sein kann, das gegebenenfalls so gestaltet ist, daß es einen Teil des Reifenwulstes klemmend umfaßt. Die Felgenringe können außer zum Klemmen der Reifenwülste auch zum Zentrieren des Reifens und zum luftdichten Anliegen eingesetzt werden.

Vorteilhafte Ausgestaltungen sind den Unteransprüchen zu entnehmen.

Nachfolgend wird ein Ausführungsbeispiel der Erfindung anhand einer Zeichnung näher erläutert. Es zeigt:

Fig. 1 ein Fahrzeugrad mit einem ersten Reifen und einem Notlaufsattel in einem radialen Teilschnitt,

Fig. 2 ein Fahrzeugrad mit einem zweiten Reifen, der sich im Wulstbereich von dem der Figur 1 unterscheidet, und mit einer anderen Unterlage, in einem radialen Teilschnitt,

Fig. 3 ein Fahrzeugrad, bei dem die Reifenwülste durch Teile des Notlaufsattels teilweise geklemmt werden, in einem radialen Teilschnitt,

Fig. 4 ein Fahrzeugrad, bei dem der Reifen auf einer enteiligen Felge montiert ist, in einem radialen Teilschnitt.

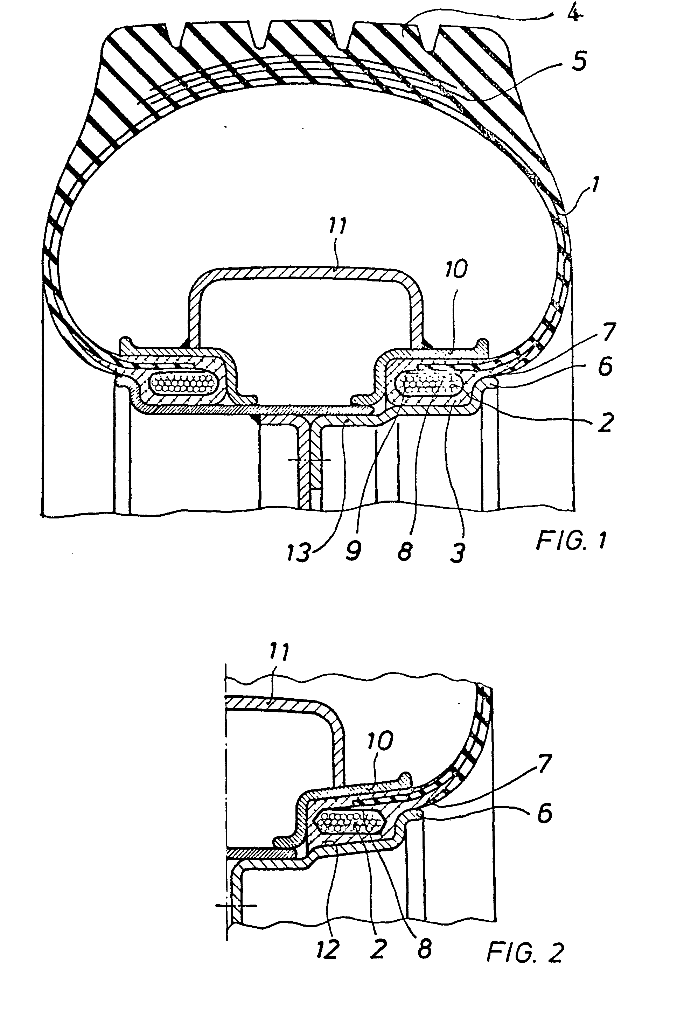

Der beim Fahrzeugrad der Figur 1 verwendete Reifen weist eine Karkasse 1 auf, die durch Umschlingen von zugfesten Wulstkernen 2 in den Wülsten 3 verankert ist.

Unterhalb des Laufstreifens 4 befindet sich ein üblicher Gürtel 5.

Vorliegend ist der Reifen auf einer mehrteiligen Felge 13 montiert. Die Reifenwülste 3 sind um radialäußeren Umfang der Felge 13 neben Felgenhörnern 6 angeordnet.

Im unterem Seitenwandbereich 7 des Reifens verläuft die Karkasse 1 nahezu waagerecht, umschlingt dann den Wulstkern 2 in der Weise, daß der umgeschlagene Karkaßabschnitt 8 radial außen vom Wulstkern 2 nach axial innen zurückgeführt ist, so daß er parallel zum Wulstkern 2 und zur Karkasse 1 verläuft und zwischen diesen geklemmt wird. Das umgeschlagene Karkaßende 9 endet bevorzugt im axial inneren und radial äußeren Eckbereich des Wulstkerns 2. Der Wulstkern weist vorliegend einen annähernd ovalen Querschnitt auf, wobei die Querschnittsbereite drei- bis sechsmal so groß ist wie die Querschnittshöhe. Der Wulstkern 2 besteht aus mehreren Lagen von nebeneinander angeordneten Drähten, die endlos gewickelt sind.

Um den Reifensitz auf der Felge 13 bei extrem hohen Belastungen noch zu verbessern, ist es günstig eine Klemmung der Reifenwülste 3 mit Hilfe von radial außen befindlichen Klemmringen 10 vorzusehen, die in axialer Richtung etwa bis zur Höhe der Felgenhörner 6 reichen und die axial innen ebenfalls an den Reifenwülsten 3 anliegen.

Im Beispiel der Figur 1 sind die Klemmringe 10 unlösbar mit einem Notlaufsattel 11 verbunden, der bei einem Reifendefekt zur Abstützung des Zenitbereichs dient. Bei der Reifenmontage werden die einzelnen Teile der Felge 13 in bakannter Weise zusammengesetzt. Es sollte angemerkt werden, daß die Klemmringe 10 außer einer Klemmwirkung auch eine Zentrier- und Dichtwirkung aufweisen.

Das Beispiel der Figur 2 unterscheidet sich von dem der Figur 1 durch einen im Querschnitt sechseckigen Wulstkern 2 und durch eine Felgensitzfläche 12, die in Querrichtung geneigt verläuft und dadurch mit der waagerechten Basis des Wulstkerns 2 einen Winkel einschließt, der 5 bis 15 Grad betragen kann. Der Klemmring 10 verläuft in Querrichtung parallel zur Felgensitzfläche 12, so daß der Abstand zwischen Felgenhorn 6 und dem Klemmring 10 wie beim Beispiel der Figur 1 etwa der Reifenwandstärke im unterem Seitenwandbereich 7 entspricht. Alle übrigen Teile des Fahrzeugrades können von dem der Figur 1 entnommen werden.

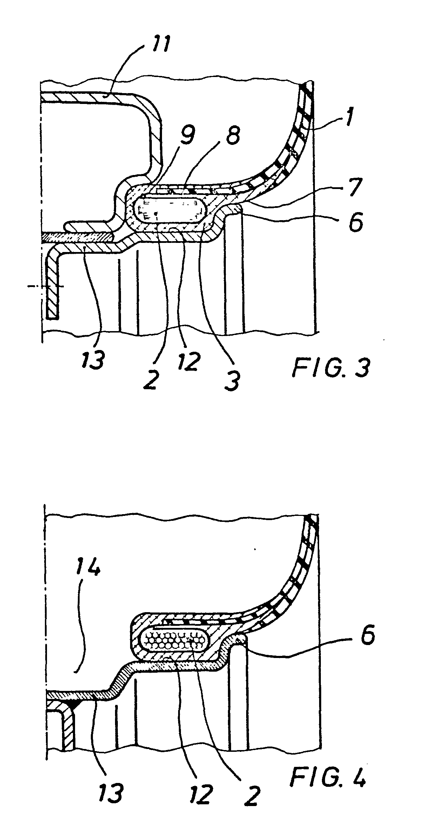

In Figur 3 ist ein Fahrzeugrad mit einer ebenfalls mehrteiligen Felge 13 dargestellt, die neben den Felgenhörnern 6 waagerechte Sitzflächen 12 für die Reifenwülste 3 aufweist.

Die Karkasse 1 und der untere Seitenwandbereich 7 des Reifens verlaufen ebenso wie beim Beispiel der Figur 1. Dies gilt auch für den umgeschlagenen Karkaßabschnitt 8 und das Karkaßende 9.

Der endlos gewickelte Wulstkern 2 ist jedoch aus einem Flachband aufgebaut, das ihm eine gewisse radiale Flexibilität und eine extrem hohe axiale Steifigkeit verleiht.

Der Notlaufsattel 11 ist derart ausgestaltet, daß er den axial inneren und einen Teil des radial äußeren Bereichs eines jeden Reifenwulstes 3 umfaßt, so daß letzterer in allen Farhsituationen sicher auf der Felge gehalten wird.

Beim Fahrzeugrad der Figur 4 entspricht der Reifen in seinem Aufbau dem der Figur 1, während die Felge 13 einteilig ausgebildet ist. Neben dem Felgenhorn 6 befindet sich eine waagerechte Felgensitzfläche 12 und neben dieser ein Tiefbett 14, da der Reifenmontage dient.

Es sollte angemerkt werden, daß einzelne Elemente der vorstehenden Beispiele untereinander austauschbar bzw. kobinierbar sind. So kann selbstverständlich die einteilige Felge der Figur 4 bei Bedarf auch schräge Sitzflächen 12 aufweisen, und die Basis des Wulstkerns 2 kann in einem solchem Falle parallel zur Sitzfläche 12 oder—in Anlehnung an das Beispiel der Figur 2—waagerecht verlaufen.

## Patentansprüche

1. Luftbereiftes Fahrzeugrad mit einem im wesentlichen aus Gummi oder gummiähnlichen Kunststoffen bestehenen Reifen mit zugfesten, flachen Wulstkernen (2) in den Reifenwülsten (3), bei dem die Quererstreckung der Wulstkerne wesentlich größer ist als die Radialerstreckung, bei dem die Karkasse (1) durch Umschlingen der Wulstkerne in den Wülsten verankert ist und bei dem die umgeschlagenen Karkaßabschnitte (8) radial außen von den Wulstkernen im wesentlichen parallel zu diesen nach axial innen hin zurück geführt sind, dadurch gekennzeichnet, daß die Karkasse (1) von der Reifenseitenwand kommend flach in den Wulstbereich einläuft und daß sie unmittelbar um umgeschlagenen Karkaßende (9) anliegt.

2. Fahrzeugrad nach Anspruch 1, dadurch gekennzeichnet, daß der der Bereich, in dem die Karkasse (1) und der umgeschlagene Karkaßabschnitt (8) unmittelbar aneinander liegen, eine Breite aufweist, die zumindest der halben Querschnittsbereite des Wulstkerns (2) entspricht.

3. Fahrzeugrad nach Anspruch 1, dadurch gekennzeichnet, daß die Querschnittsbreite des Wulstkerns (2) drei- bis sechsmal so groß ist wie die Querschnittshöhe.

4. Fahrzeugrad nach Anspruch 1, dadurch gekennzeichnet, daß die Reifenwülste (3) am radial äußeren Umfang einer ein- oder mehrteiligen Felge (13) angeordnet sind.

5. Fahrzeugrad nach Anspruch 1 oder 4, dadurch gekennzeichnet, daß die Wülste (3) von Klemmringen (10) geklemmt werden, die sich radial außen von den Reifenwülsten (3) befinden und in axialer Richtung etwa bis zur Höhe der Felgenhörner (6) reichen.

6. Fahrzeugrad nach Anspruch 1 oder 5, gekennzeichnet durch einen Notlaufsattel (11), der unlösbar mit den Klemmringen (10) verbunden sein kann.

7. Fahrzeugrad nach Anspruch 1, dadurch gekennzeichnet, daß die Wulstkerne (2) des Reifens aus mehreren Lagen mit nebeneinander angeordneten Drähten endlos gewickelt sind.

8. Fahrzeugrad nach Anspruch 1, dadurch gekennzeichnet, daß die Wulstkerne (2) des Reifens aus mehreren Lagen eines Flachbandes hergestellt sind.

9. Fahrzeugluftreifen, gekennzeichnet durch seine Verwendung in Verbindung mit einem Fahrzeugrad nach Anspruch 1.

## Revendications

1. Roue pour véhicule équipée d'un pneumatique se composant dans l'essentiel de caoutchouc ou de matières plastiques analogues au caoutchouc et pourvu de tringles (2) plates et résistantes à la traction dans les talons (3) du pneumatique, dans lequel la dimension transversale des tringles de talon est sensiblement plus grande que la dimension radiale, dans lequel la carcasse (1) est accrochée dans les talons par enroulement autour de ces derniers et dans lequel les parties (8) de carcasse ainsi entourées sont rétractées axialement vers l'intérieur à partir d'une zone située radialement à l'extérieur des tringles de talon et sensiblement parallèlement à celles-ci, caractérisée en ce que la carcasse (1) pénètre, à partir du flanc du pneumatique, à plat dans la zone de telon et en ce qu'elle s'applique directement contre l'extrémité enroulée (9) de la carcasse.

2. Roue de véhicule selon la revendication 1, caractérisée en ce que la zone, dans laquelle la carcasse (1) et la partie enroulée (8) de cette carcasse s'appliquent directement l'une contre l'autre, à une largeur qui correspond au moins à la moitié de la largeur de section droite de la tringle de talon (2).

3. Roue de véhicule selon la revendication 1, caractérisée en ce que la largeur de section droite de la tringle de talon (2) est de 3 à 6 fois plus grande que la hauteur de section droite.

4. Roue de véhicule selon la revendication 1, caractérisée en ce que les talons (3) du pneumatique sont disposés sur une périphérie radialement extérieure d'une jante (13) en une ou plusieurs parties.

5. Roue de véhicule selon une des revendications 1 ou 4, caractérisée en ce que les talons (3) sont bloqués par des anneaux de blocage (10), qui sont situés radialement à l'extérieur des talons (3) du pneumatique et qui s'étendent en direction axiale à peu près jusqu'à la hauteur des rebords (6) de la jante.

6. Roue de véhicule selon une des revendications 1 ou 5, caractérisée en ce qu'il est prévu un bandage (11) pour roulement de secours, qui peut être relié de façon inséparable aux anneaux de blocage (10).

7. Roue de véhicule selon la revendication 1, caractérisé en ce que les tringles (2) des talons du pneumatique se composent de plusieurs couches de fils métalliques disposés l'un à côté de l'autre et enroulés sans fin.

8. Roue de véhicule selon la revendication 1, caractérisée en ce que les tringles (2) des talons du pneumatique sont formées de plusieurs couches d'un ruban plat.

9. Pneumatique de véhicule, caractérisé par son utilisation en combinaison avec une roue de véhicule conforme à la revendication 1.

**Claims**

1. Vehicle wheel which is fitted with a pneumatic tyre and has a tyre formed substantially from rubber or rubber-like plastics materials, such tyre having substantially inextensible, flat bead cores (2) in the tyre beads (3), wherein the transverse extension of the bead cores is substantially greater than the radial extension, wherein the carcase (1) is secured in the beads by being looped around the bead cores, and wherein the looped-around carcase portions (8) are guided back in an axially inward manner radially externally of the bead cores and extend substantially parallel thereto, characterised in that the carcase (1), coming from the lateral wall of the tyre, passes into the bead region in a flat manner, and in that it abuts immediately against the looped-around carcase end (9).

2. Vehicle wheel according to claim 1, characterised in that the region, in which the carcase (1) and the looped-around carcase portion (8) abut immediately against one another, has a width which corresponds to at least half the cross-sectional width of the bead core (2).

3. Vehicle wheel according to claim 1, characterised in that the cross-sectional width of the bead core (2) is three to six times as large as the cross-sectional height.

4. Vehicle wheel according to claim 1, characterised in that the tyre beads (3) are disposed on the radially outer circumference of a one-part or multiple-part rim (13).

5. Vehicle wheel according to claim 1 or 4, characterised in that the beads (3) are clamped by clamping rings (10), which are situated radially externally of the tyre beads (3) and extend in an axial direction to roughly the height of the rim flanges (6).

6. Vehicle wheel according to claim 1 or 5, characterised by an emergency running saddle (11), which may be non-detachably connected to the clamping rings (10).

7. Vehicle wheel according to claim 1, characterised in that the bead cores (2) of the tyre, which are formed from a plurality of plies, are endlessly wound with wires which are disposed adjacent one another.

8. Vehicle wheel according to claim 1, characterised in that the bead cores (2) of the tyre are formed from a plurality of plies of a flat strip.

9. Pneumatic vehicle tyre, characterised by its use in conjunction with a vehicle wheel according to claim 1.

FIG. 1

FIG. 2

FIG. 3

FIG. 4